# EUROPEAN PATENT APPLICATION

(11) **EP 4 572 293 A1**
(43) Date of publication of application: **18.06.2025**
(21) Application number: 24217392.0
(22) Date of filing: 04.12.2024
(51) Int. Cl.: H04L 67/125, G05D 1/00, B60W 60/00

(54) **REMOTE OPERATING SYSTEM, REMOTE OPERATOR TERMINAL, AND REMOTE OPERATION MANAGEMENT METHOD**

(30) Priority: 12.12.2023 JP 2023209380
(71) Applicant: TOYOTA JIDOSHA KABUSHIKI KAISHA, Aichi-ken, 471-8571 (JP)
(72) Inventor: SUEHIRO, Yuki, Toyota-shi, 471-8571 (JP); TAMAGAWA, Shuichi, Toyota-shi, 471-8571 (JP)
(74) Representative: TBK

(57) **Abstract**

A remote operating system (1) for a remote operation of a mobility device includes one or more processors. The one or more processors are configured to acquire terminal status information (STA-T) indicating a status of a remote operator terminal (200) configured to be used by a remote operator (O) for the remote operation, and calculate a terminal score (SCR-T) indicating a suitability of the remote operator terminal (200) for the remote operation based on the terminal status information (STA-T). The terminal score (SCR-T) is used to select a first remote operator terminal (200-X) to be assigned to the remote operation of a target mobility device (100-X).

## Description

### BACKGROUND OF THE INVENTION

### 1. Field of the Invention

The disclosure relates to remote operating system, remote operator terminal, and remote operation management method.

### 2. Description of Related Art

US 2020/0062267 describes a system related to a remote operation of a vehicle. The system assigns an appropriate remote operator to a remote operation of a vehicle based on skills and empirical values of remote operators.

### SUMMARY OF THE INVENTION

A situation in which a remote operator performs a remote operation of a mobility device will be discussed. A remote operator terminal used by a remote operator to perform remote operation can be in a status appropriate for a remote operation and can be not. If a remote operator terminal inappropriate for remote operation is used, the accuracy of remote operation decreases. US 2020/0062267 does not take the status of a remote operator terminal into consideration.

The disclosure provides a technology for making it possible to ensure the accuracy of remote operation of a mobility device.

A remote operating system for a remote operation of a mobility device according to a first aspect of the disclosure includes one or more processors. The one or more processors configured to acquire terminal status information indicating a status of a remote operator terminal configured to be used by a remote operator for the remote operation, and calculate a terminal score indicating a suitability of the remote operator terminal for the remote operation based on the terminal status information. The terminal score is used to select a first remote operator terminal to be assigned to the remote operation of a target mobility device.

In the remote operating system according to the first aspect of the disclosure, the status of the remote operator terminal may include a communication status of the remote operator terminal. The terminal score may include a first terminal score that increases as the communication status of the remote operator terminal gets better.

In the remote operating system according to the first aspect of the disclosure, the status of the remote operator terminal may include an abnormality level of a controller of the remote operator terminal. The terminal score may include a second terminal score that decreases as the abnormality level increases.

In the remote operating system according to the first aspect of the disclosure, the one or more processors may be configured to acquire the terminal status information in real time, and calculate the terminal score in real time.

In the remote operating system according to the first aspect of the disclosure, the one or more processors may be configured to acquire operator status information indicating a status of the remote operator, and calculate an operator score indicating a suitability of the remote operator for the remote operation based on the operator status information. The operator score may be used to select a first remote operator to be assigned to the remote operation of the target mobility device.

In the remote operating system according to the first aspect of the disclosure, the status of the remote operator may include a health condition of the remote operator. The operator score may include a first operator score that increases as the health condition of the remote operator gets better.

In the remote operating system according to the first aspect of the disclosure, the status of the remote operator may include working hours during which the remote operator is involved in the remote operation in a past certain period. The operator score may include a second operator score that decreases as the working hours extend.

In the remote operating system according to the first aspect of the disclosure, the status of the remote operator may include an hourly wage of the remote operator. The operator score may include a third operator score that increases as the hourly wage decreases.

In the remote operating system according to the first aspect of the disclosure, the one or more processors may be configured to acquire the operator status information in real time, and calculate the operator score in real time.

In the remote operating system according to the first aspect of the disclosure, the one or more processors may be configured to calculate an integrated score by integrating the terminal score with the operator score. The integrated score may indicate a suitability of a combination of the remote operator terminal for the remote operation and the remote operator for the remote operation. The integrated score may be used to select a combination of the first remote operator and the first remote operator terminal, to be assigned to the remote operation of the target mobility device.

In the remote operating system according to the first aspect of the disclosure, the one or more processors may be configured to select a combination of the first remote operator and the first remote operator terminal, to be assigned to the remote operation of the target mobility device, based on the terminal score and the operator score.

In the remote operating system according to the first aspect of the disclosure, the one or more processors may be configured to acquire terminal specification information indicating specifications of each of a plurality of remote operator terminals, acquire required capability information indicating required terminal specifications required from the remote operation of the target mobility device, and select the combination of the first remote operator and the first remote operator terminal with the required terminal specifications, based on the terminal specification information, the required terminal specifications, the terminal score, and the operator score.

In the remote operating system according to the first aspect of the disclosure, there may be multiple types of mobility devices. The one or more processors may be configured to acquire operator license information indicating a license held by each of a plurality of remote operators in relation to an operation of the multiple types of mobility devices, acquire required capability information indicating a required license required from the remote operation of the target mobility device, and select the combination of the first remote operator terminal and the first remote operator with the required license, based on the operator license information, the required license, the terminal score, and the operator score.

In the remote operating system according to the first aspect of the disclosure, the required capability information may indicate required terminal specifications required from the remote operation of the target mobility device. The one or more processors may be configured to acquire terminal specification information indicating specifications of each of a plurality of remote operator terminals, and select the combination of the first remote operator having the required license and the first remote operator terminal having the required terminal specifications, based on the operator license information, the terminal specification information, the required capability information, the terminal score, and the operator score.

A remote operator terminal used by a remote operator for a remote operation of a mobility device according to a second aspect of the disclosure include comprising one or more processors. The one or more processors configured to acquire terminal status information indicating a status of the remote operator terminal, calculate a terminal score indicating a suitability of the remote operator terminal for the remote operation based on the terminal status information, and transmit information on the terminal score or information on an integrated score incorporating the terminal score to a management system that selects a first remote operator and a first remote operator terminal, to be assigned to the remote operation of a target mobility device.

In the remote operator terminal according to a second aspect of the disclosure, the one or more processors may be configured to acquire operator status information indicating a status of the remote operator, calculate an operator score indicating a suitability of the remote operator for the remote operation based on the operator status information, and transmit information on the operator score or information on the integrated score incorporating the terminal score and the operator score to the management system.

In the remote operator terminal according to a second aspect of the disclosure, the one or more processors may be configured to calculate the integrated score indicating a suitability of a combination of the remote operator terminal and the remote operator for the remote operation by integrating the terminal score with the operator score, and transmit information on the integrated score to the management system.

A remote operation management method for a computer to manage a remote operation of a mobility device according to a third aspect of the disclosure includes acquiring terminal status information indicating a status of a remote operator terminal configured to be used by a remote operator for the remote operation, calculating a terminal score indicating a suitability of the remote operator terminal for the remote operation based on the terminal status information, and selecting a first remote operator terminal to be assigned to the remote operation of a target mobility device based on the terminal score.

According to the first aspect, the second aspect, and the third aspect of the disclosure, a terminal score indicating a suitability of a remote operator terminal for a remote operation is calculated based on a status of the remote operator terminal. Then, a first remote operator terminal to be assigned to the remote operation of a target mobility device, is selected based on the terminal score. In other words, an appropriate first remote operator terminal is assigned to the remote operation of the target mobility device in consideration of the suitability. Thus, the accuracy of the remote operation of the target mobility device is ensured.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram for illustrating the general outline of a remote operating system;
FIG. 2 is a table that shows an example of the contents of various remote operations required in relation to various mobility devices;
FIG. 3 is a conceptual diagram that shows a configuration example of the remote operating system;
FIG. 4 is a block diagram that shows a configuration example of a mobility device;
FIG. 5 is a block diagram that shows a configuration example of a remote operator terminal;
FIG. 6 is a block diagram that shows a configuration example of a management system;
FIG. 7 is a conceptual diagram for illustrating the general outline of an assignment process by the management system;
FIG. 8 is a block diagram that shows an example of the functional configuration concerned with score calculation;
FIG. 9 is a conceptual diagram that shows an example of an operator status and an operator score;
FIG. 10 is a conceptual diagram that shows an example of a terminal status and a terminal score;
FIG. 11 is a block diagram that shows another example of the functional configuration concerned with score calculation;
FIG. 12 is a block diagram that shows a functional configuration example concerned with an assignment process in a first viewpoint;
FIG. 13 is a conceptual diagram that shows an example of operator license information;
FIG. 14 is a block diagram that shows a functional configuration example concerned with an assignment process in a second viewpoint;
FIG. 15 is a conceptual diagram that shows an example of terminal specification information;
FIG. 16 is a block diagram that shows a functional configuration example concerned with an assignment process in a third viewpoint;
FIG. 17 is a conceptual diagram that shows an example of terminal specification information and required terminal specifications in relation to an operational system; and
FIG. 18 is a conceptual diagram that shows an example of terminal specification information and required terminal specifications in relation to a display system.

### DETAILED DESCRIPTION OF EMBODIMENTS

An embodiment of the disclosure will be described with reference to the accompanying drawings.

### 1. General Outline of Remote Operating System

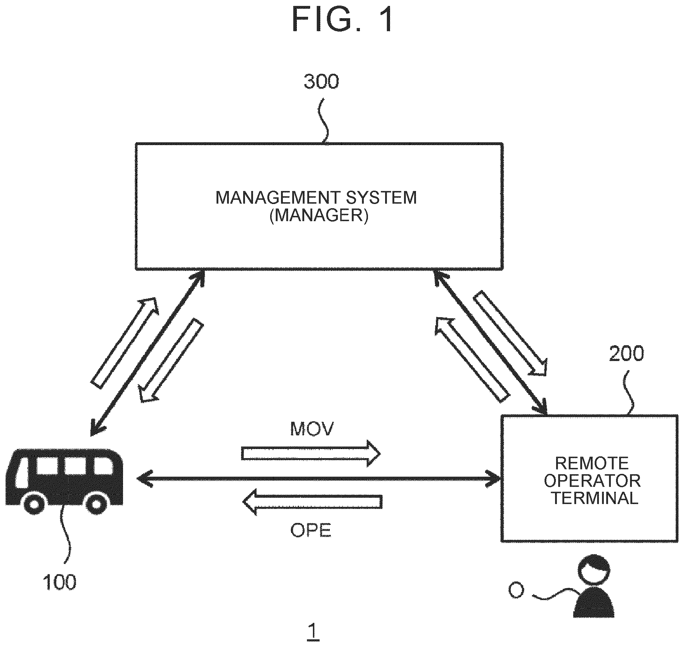

FIG. 1 is a conceptual diagram for illustrating the general outline of a remote operating system 1 according to the present embodiment. The remote operating system 1 is a system for a remote operation of a mobility device 100. A remote operation is a concept including remote driving. The remote operating system 1 includes the mobility device 100, a remote operator terminal 200, and a management system 300.

The mobility device 100 is a movable mobile object. The mobility device 100 may be manually operated by an operator in the mobility device 100. The mobility device 100 may include an autonomous movement function. In any case, the mobility device 100 is configured such that the mobility device 100 can also be remotely operated as needed. In other words, the mobility device 100 is a target of remote operation by the remote operating system 1.

The number of types of the mobility device 100 serving as a target of remote operation is not limited to one and may be multiple. Examples of the mobility device 100 include vehicles that drive on public roads (such as a passenger vehicle, a truck, a bus, a MaaS vehicle, and an autonomous vehicle). Other examples of the mobility device 100 may include vehicles used in factories (such as a forklift and a factory carriage). Further other examples of the mobility device 100 may include special-purpose small vehicles (such as a golf cart, a personal mobility device, and an electric wheelchair). Further other examples of the mobility device 100 may include construction equipment (such as a power shovel and a bulldozer). Further other examples of the mobility device 100 may include robots (such as a logistics robot and a work robot). Further other examples of the mobility device 100 may include flying objects (such as a drone). Further other examples of the mobility device 100 may include ships (such as a small craft and a large cruiser). Further other examples of the mobility device 100 may include vehicles in amusement parks (such as a cart and an attraction).

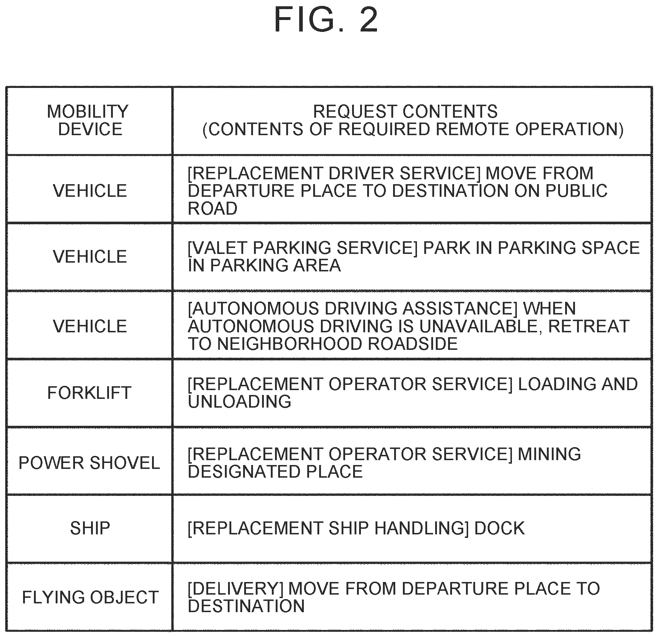

FIG. 2 shows an example of the contents of various remote operations required in relation to various mobility devices 100. As shown in FIG. 2, there are a wide variety of mobility devices 100, and there are also a wide variety of the contents of remote operations required. A remote operation may be required from the mobility device 100 itself or may be required from a service business operator having a tie-up with the remote operating system 1. In the latter case, the contents of remote operation can be regarded as the contents of service provided by the service business operator.

The remote operator terminal 200 is a terminal device that is used at the time when a remote operator O remotely operates the mobility device 100. In other words, the remote operator terminal 200 is configured to be used by the remote operator O for a remote operation of the mobility device 100. Examples of the remote operator terminal 200 include a cockpit terminal, a PC, a tablet, and a smartphone. The single remote operator terminal 200 may be configured to be capable of supporting remote operations of various types of mobility devices 100. Alternatively, the single remote operator terminal 200 may be exclusive to a remote operation of a specific mobility device 100. A combination of the remote operator O with the remote operator terminal 200 may be determined in advance or may be freely changeable. In other words, the single remote operator terminal 200 may be used by only a specific remote operator O or may be used sequentially by various remote operators O.

The management system (manager) 300 manages the remote operating system 1. The management system 300 may be made up of a plurality of servers that perform distributed processing. For example, the management system 300 manages a plurality of remote operators O and a plurality of remote operator terminals 200. The management system 300 assigns a remote operator O and a remote operator terminal 200 to a remote operation of the mobility device 100 in response to a remote operation request. The management system 300 may manage the status of the mobility device 100 in remote operation. The details of the management system 300 will be described later.

The mobility device 100, the remote operator terminal 200, and the management system 300 can communicate with one another via a communication network. For example, the mobility device 100 is capable of wirelessly communicating with the remote operator terminal 200 and the management system 300 via a wireless communication network. The remote operator terminal 200 and the management system 300 can communicate with each other via a wired communication network or a wireless communication network. The mobility device 100 and the remote operator terminal 200 may communicate with each other via the management system 300 or may directly communicate with each other without intervening the management system 300.

A major flow of information in the middle of remote operation of the mobility device 100 is as follows.

The mobility device 100 is equipped with various sensors including a camera. The camera captures the image of a situation around the mobility device 100. A video showing a situation around the mobility device 100 can be obtained with the camera. Mobility device information MOV is information obtained by various sensors and includes at least a video captured with the camera. Mobility device information MOV may include the locations and statuses of the mobility device 100 (such as speed and steering angle). The mobility device 100 transmits the mobility device information MOV to the remote operator terminal 200.

The remote operator terminal 200 receives the mobility device information MOV transmitted from the mobility device 100. The remote operator terminal 200 presents the mobility device information MOV to the remote operator O. Specifically, the remote operator terminal 200 includes a display device and displays a video or the like on the display device. The remote operator O recognizes a situation around the mobility device 100 by seeing the information displayed and performs a remote operation of the mobility device 100. Remote operation information OPE is information related to a remote operation by the remote operator O (steering operation, acceleration operation, deceleration operation, forward and backward movement operation, and lateral movement operation). For example, the remote operation information OPE includes an operation amount input by the remote operator O. The remote operation information OPE may be regarded as information incorporating the degree of remote operation by the remote operator O. The remote operator terminal 200 transmits the remote operation information OPE to the mobility device 100.

The mobility device 100 receives the remote operation information OPE transmitted from the remote operator terminal 200. The mobility device 100 executes mobility device control in accordance with the received remote operation information OPE. In this way, a remote operation of the mobility device 100 is implemented.

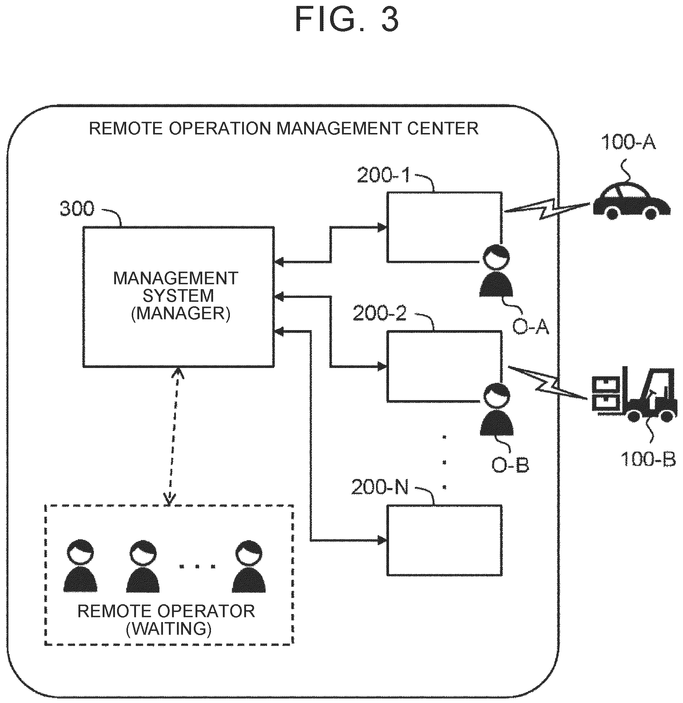

FIG. 3 is a conceptual diagram that shows a configuration example of the remote operating system 1. In the example shown in FIG. 3, a remote operation management center is provided in a predetermined area or a predetermined building. The management system 300 and a plurality of the remote operator terminals 200 (200-1 to 200-N: N is an integer greater than or equal to two) are installed in the remote operation management center. A plurality of the remote operators O works in the remote operation management center. The management system 300 monitors the statuses of the remote operator terminals 200 in the remote operation management center and manages the remote operator terminals 200. The management system 300 monitors the statuses of the remote operators O in the remote operation management center and manages the remote operators O.

### 2. Configuration Example

### 2-1. Configuration Example of Mobility Device

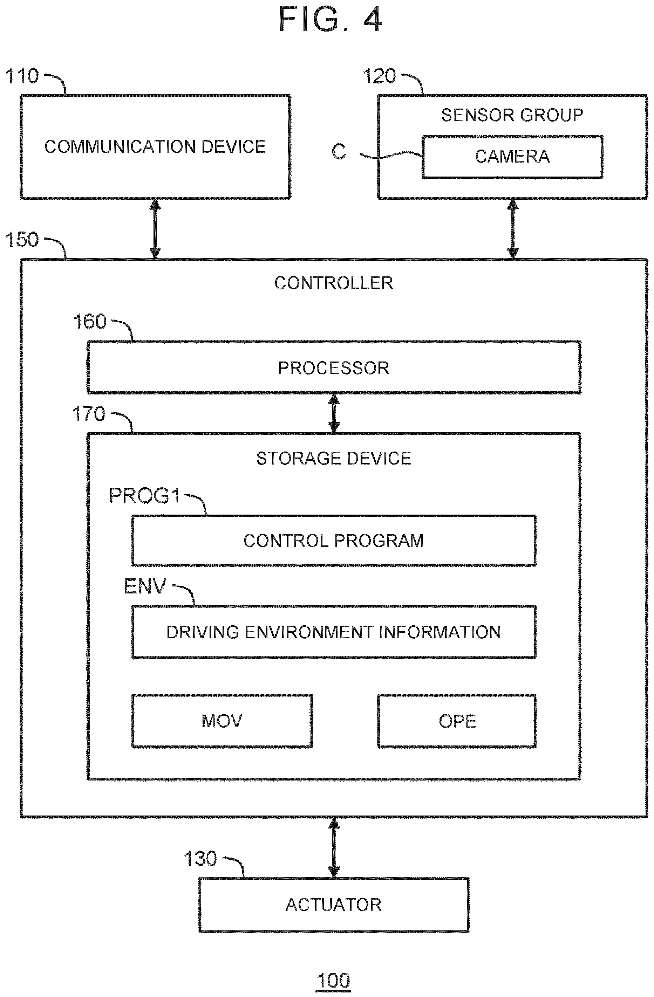

FIG. 4 is a block diagram that shows a configuration example of the mobility device 100. The mobility device 100 includes a communication device 110, a sensor group 120, one or more actuators 130, and a controller 150.

The communication device 110 performs wireless communication with devices outside the mobility device 100. For example, the communication device 110 performs wireless communication with the remote operator terminal 200 or the management system 300.

The sensor group 120 includes a recognition sensor, a mobility device status sensor, a location sensor, and the like. The recognition sensor recognizes (detects) a situation around the mobility device 100. Examples of the recognition sensor include a camera C, laser imaging detection and ranging (LIDAR), and radar. The mobility device status sensor detects the status of the mobility device 100. The mobility device status sensor includes a speed sensor, an acceleration sensor, a yaw rate sensor, a steering angle sensor, and the like. The location sensor detects the location and azimuth of the mobility device 100. For example, the location sensor includes a global navigation satellite system (GNSS).

The actuator 130 moves the mobility device 100. Examples of the actuator 130 include a forward and backward movement actuator for moving forward and backward (accelerating or decelerating) the mobility device 100. Other examples of the actuator 130 may include a lateral movement actuator for laterally moving the mobility device 100. When the mobility device 100 includes an arm, further other examples of the actuator 130 may include an arm actuator that moves the arm.

When the mobility device 100 is a common vehicle, examples of the actuator 130 include a steering device, a drive device, and a braking device. The steering device steers wheels. Examples of the steering device include a power steering (electric power steering (EPS)) system. The drive device is a power source for generating driving force. Examples of the drive device include an engine, an electric motor, and an in-wheel motor. The braking device generates braking force.

The controller 150 is a computer that controls the mobility device 100. The controller 150 includes one or more processors 160 (hereinafter, simply referred to as processor 160) and one or more storage devices 170 (hereinafter, simply referred to as storage device 170). The processor 160 executes various processes. Examples of the processor 160 include a general-purpose processor, an application specific processor, a central processing unit (CPU), a graphics processing unit (GPU), an application specific integrated circuit (ASIC), a field-programmable gate array (FPGA), an integrated circuit, a conventional circuit and/or combinations of any two or more of them. The processor 160 may be called circuitry or processing circuitry. Circuitry is hardware programmed to implement the functions described or hardware that executes the functions. The storage device 170 stores various pieces of information. Examples of the storage device 170 include a volatile memory, a nonvolatile memory, a hard disk drive (HDD), and a solid state drive (SSD).

A control program PROG1 is a computer program that is run by the processor 160. The functions of the controller 150 may be implemented by cooperation of the storage device 170 with the processor 160 that runs the control program PROG1. The control program PROG1 is stored in the storage device 170. Alternatively, the control program PROG1 may be recorded on a computer-readable recording medium.

The controller 150 acquires driving environment information ENV indicating a driving environment of the mobility device 100. The driving environment information ENV is stored in the storage device 170.

The driving environment information ENV includes surrounding situation information indicating a recognition result by the recognition sensor. For example, the surrounding situation information includes a video captured by the camera C. The surrounding situation information may include object information on an object around the mobility device 100. Examples of the object around the mobility device 100 include a pedestrian, other vehicles (such as a preceding vehicle and a parked vehicle), a white line, a stop line, a traffic signal, a sign, and a roadside structure. Object information indicates the relative location and relative speed of an object with respect to the mobility device 100. For example, it is possible to identify an object and calculate the relative location of the object by analyzing a video obtained by the camera. It is also possible to identify an object and acquire the relative location and relative speed of the obj ect based on point group information obtained by LIDAR.

The driving environment information ENV may include mobility device status information indicating a detection result of the mobility device status sensor. The mobility device status information indicates the speed, acceleration (longitudinal acceleration and lateral acceleration), yaw rate, steering angle, and the like of the mobility device 100.

The driving environment information ENV may further include location information indicating the location and moving direction (azimuth) of the mobility device 100. The location information is obtained by the location sensor. High-accuracy location information may be acquired by self-position estimation (localization) using map information and surrounding situation information (object information).

The controller 150 executes movement control for controlling the movement of the mobility device 100. Movement control includes longitudinal movement control and lateral movement control. The controller 150 executes movement control by controlling the actuator 130.

The controller 150 may execute autonomous movement control based on the driving environment information ENV. More specifically, the controller 150 generates a movement plan of the mobility device 100 based on the driving environment information ENV. In addition, the controller 150 generates a target trajectory necessary for the mobility device 100 to drive in accordance with the movement plan, based on the driving environment information ENV. The target trajectory includes a target location and a target speed. Then, the controller 150 executes movement control such that the mobility device 100 follows the target trajectory.

When the remote operation of the mobility device 100 is performed, the controller 150 performs communication with the remote operator terminal 200 via the communication device 110.

The controller 150 transmits the mobility device information MOV to the remote operator terminal 200. The mobility device information MOV is information necessary for the remote operator O to perform a remote operation of the mobility device 100 and includes at least part of the above-described driving environment information ENV. Particularly, the mobility device information MOV includes a video captured by the camera C. The mobility device information MOV may include other surrounding situation information. The mobility device information MOV may include mobility device status information. The mobility device information MOV may include location information.

The controller 150 receives the remote operation information OPE from the remote operator terminal 200. Remote operation information OPE is information related to a remote operation by the remote operator O (steering operation, acceleration operation, deceleration operation, forward and backward movement operation, and lateral movement operation). For example, the remote operation information OPE includes an operation amount input by the remote operator O. The controller 150 executes movement control in accordance with the received remote operation information OPE.

### 2-2. Configuration Example of Remote Operator Terminal

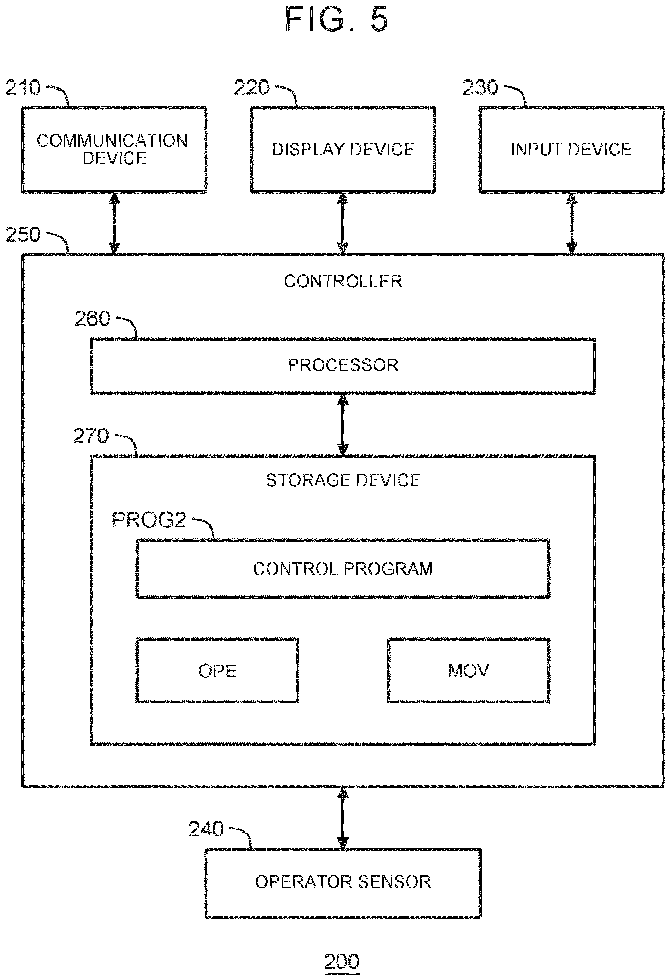

FIG. 5 is a block diagram that shows a configuration example of the remote operator terminal 200. The remote operator terminal 200 includes a communication device 210, a display device 220, an input device 230, an operator sensor 240, and a controller 250.

The communication device 210 performs communication with the mobility device 100 and the management system 300.

The display device 220 displays various pieces of information for the remote operator O that performs a remote operation. In other words, the display device 220 presents various pieces of information to the remote operator O by displaying various pieces of information. Typically, the display device 220 is a display (monitor), such as a liquid crystal display and an organic EL display. The display device 220 may be a touch panel.

The input device 230 receives input from the remote operator O. For example, the input device 230 includes a remote operating member that the remote operator O operates at the time of performing a remote operation of the mobility device 100. Examples of the remote operating member include a handle (steering wheel), an accelerator pedal, a brake pedal, a direction indicator, a joystick, an arrow key, and a switch. The remote operating member may be a touch panel. The input device 230 may include a keyboard, a mouse, a touch panel, or the like, other than the remote operating member.

The operator sensor 240 is a sensor for monitoring the status of the remote operator O. For example, the operator sensor 240 includes a biometric sensor that detects biometric information of the remote operator O. Examples of the biometric information include body temperature, heart rate, blood pressure, and sweat rate.

The controller 250 controls the remote operator terminal 200. The controller 250 includes one or more processors 260 (hereinafter, simply referred to as processor 260) and one or more storage devices 270 (hereinafter, simply referred to as storage device 270). The processor 260 executes various processes. Examples of the processor 260 include a CPU, a GPU, an ASIC, and an FPGA. The storage device 270 stores various pieces of information. Examples of the storage device 270 include a volatile memory, a nonvolatile memory, an HDD, and an SSD. The processor 260 executes various processes. Examples of the processor 260 include a general-purpose processor, an application specific processor, a CPU, a GPU, an ASIC, an FPGA, an integrated circuit, a conventional circuit, and/or combinations of any two or more of them. The processor 260 may be called circuitry or processing circuitry. Circuitry is hardware programmed to implement the functions described or hardware that executes the functions. The storage device 270 stores various pieces of information. Examples of the storage device 270 include a volatile memory, a nonvolatile memory, an HDD, and an SSD.

A control program PROG2 is a computer program that is run by the processor 260. The functions of the controller 250 may be implemented by cooperation of the storage device 270 with the processor 260 that runs the control program PROG2. The control program PROG2 is stored in the storage device 270. Alternatively, the control program PROG2 may be recorded on a computer-readable recording medium. The control program PROG2 may be provided via a network.

The controller 250 performs communication with the mobility device 100 via the communication device 210. The controller 250 receives the mobility device information MOV transmitted from the mobility device 100. The controller 250 presents the mobility device information MOV to the remote operator O by displaying the mobility device information MOV including a video on the display device 220. The remote operator O is capable of recognizing the status of the mobility device 100 and a situation around the mobility device 100 based on the mobility device information MOV displayed on the display device 220.

The remote operator O operates the remote operating member of the input device 230. An operation amount of the remote operating member is detected by a sensor installed in the remote operating member. The controller 250 generates the remote operation information OPE incorporating the operation amount of the remote operating member by the remote operator O. The remote operation information OPE may be regarded as information incorporating the degree of remote operation by the remote operator O. Then, the controller 250 transmits the remote operation information OPE to the mobility device 100 via the communication device 210.

### 2-3. Configuration Example of Management System

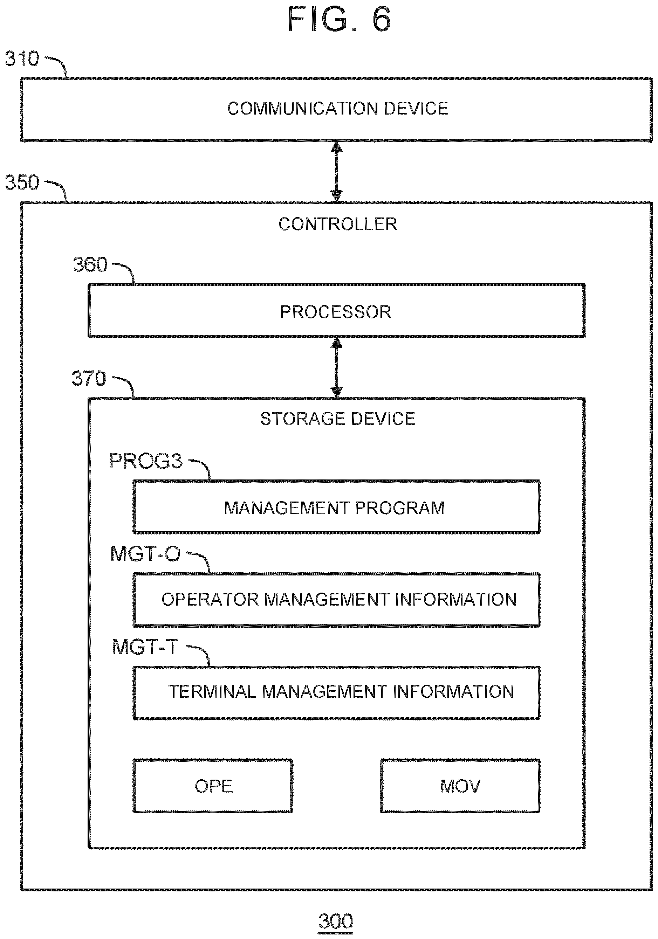

FIG. 6 is a block diagram that shows a configuration example of the management system 300. The management system 300 includes a communication device 310 and a controller 350.

The communication device 310 performs communication with the mobility device 100 and the remote operator terminal 200.

The controller 350 controls the management system 300. The controller 350 includes one or more processors 360 (hereinafter, simply referred to as processor 360) and one or more storage devices 370 (hereinafter, simply referred to as storage device 370). The processor 360 executes various processes. Examples of the processor 360 include a general-purpose processor, an application specific processor, a CPU, a GPU, an ASIC, an FPGA, an integrated circuit, a conventional circuit, and/or combinations of any two or more of them. The processor 360 may be called circuitry or processing circuitry. Circuitry is hardware programmed to implement the functions described or hardware that executes the functions. The storage device 370 stores various pieces of information. Examples of the storage device 370 include a volatile memory, a nonvolatile memory, an HDD, and an SSD.

A management program PROG3 is a computer program that is run by the processor 360. The functions of the controller 350 may be implemented by cooperation of the storage device 370 with the processor 360 that runs the management program PROG3. The management program PROG3 is stored in the storage device 370. Alternatively, the management program PROG3 may be recorded on a computer-readable recording medium. The management program PROG3 may be provided via a network.

Operator management information MGT-O and terminal management information MGT-T are stored in the storage device 370. The operator management information MGT-O is information for managing a plurality of remote operators O. For example, the operator management information MGT-O indicates operator ID, holding licenses, status of use (availability), assignment status, work history, and the like, for each remote operator O. The terminal management information MGT-T is information for managing a plurality of remote operator terminals 200. For example, the terminal management information MGT-T indicates terminal ID, specifications, status of use (availability), assignment status, operation history, and the like, for each remote operator terminal 200.

The controller 350 performs communication with the mobility device 100 and the remote operator terminal 200 via the communication device 310. The controller 350 may relay communication between the mobility device 100 and the remote operator terminal 200. In other words, the controller 350 may relay the mobility device information MOV or the remote operation information OPE between the mobility device 100 and the remote operator terminal 200.

Before the start of remote operation of the mobility device 100, the controller 350 executes "assignment process" to assign an appropriate remote operator O and an appropriate remote operator terminal 200 to the remote operation of the mobility device 100. Hereinafter, the assignment process by the management system 300 (controller 350) will be described in more details.

### 3. Assignment Process

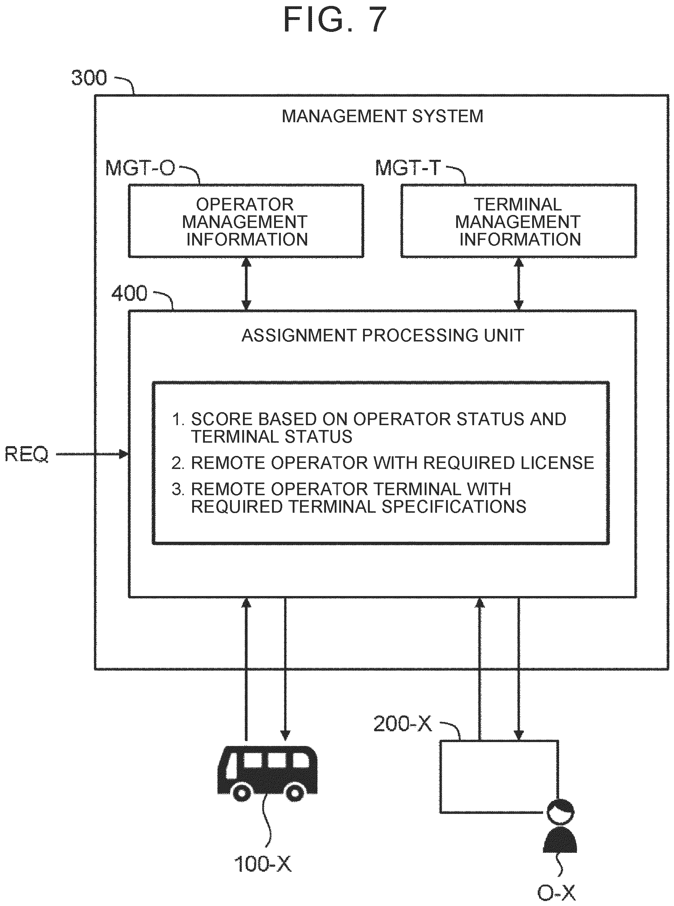

FIG. 7 is a conceptual diagram for illustrating the general outline of the assignment process by the management system 300. The mobility device 100 that is a target of remote operation is, hereinafter, referred to as "target mobility device 100". A remote operator O to be assigned to a remote operation of a target mobility device 100-X is, hereinafter, referred to as "first remote operator O-X". A remote operator terminal 200 to be assigned to a remote operation of a target mobility device 100-X is, hereinafter, referred to as "first remote operator terminal 200-X".

The management system 300 (controller 350) includes an assignment processing unit 400 that executes assignment process. Initially, the assignment processing unit 400 receives a remote operation request REQ on the target mobility device 100-X. For example, the remote operation request REQ is issued from the target mobility device 100-X itself. In this case, the target mobility device 100-X transmits the remote operation request REQ to the management system 300 via wireless communication. In another example, the remote operation request REQ may be transmitted from a service business operator having a tie-up with the remote operating system 1 to the management system 300.

The remote operation request REQ indicates the type of the target mobility device 100-X and a desired content of remote operation. In response to the received remote operation request REQ, the assignment processing unit 400 assigns the first remote operator O-X and the first remote operator terminal 200-X to the remote operation of the target mobility device 100-X. More specifically, the assignment processing unit 400 assigns an appropriate first remote operator O-X of the remote operators O to the remote operation of the target mobility device 100-X based on the remote operation request REQ and the operator management information MGT-O. The assignment processing unit 400 assigns an appropriate first remote operator terminal 200-X of the remote operator terminals 200 to the remote operation of the target mobility device 100-X based on the remote operation request REQ and the terminal management information MGT-T.

To implement an appropriate assignment process, the following three viewpoints will be considered.
[First Viewpoint] The status of each remote operator O and the status of each remote operator terminal 200
[Second Viewpoint] Licenses held by each remote operator O and a required license required from the remote operation of the target mobility device 100-X
[Third Viewpoint] The terminal specifications of each remote operator terminal 200 and required terminal specifications required from the remote operation of the target mobility device 100-X

The assignment processing unit 400 executes the assignment process in consideration of at least one of the first to third viewpoints. The assignment processing unit 400 may execute the assignment process in consideration of two or more of the first to third viewpoints. Hereinafter, the first viewpoint, the second viewpoint, and the third viewpoint will be respectively described in detail in Section 4, Section 5, and Section 6.

### 4. [First Viewpoint]

### Assignment Process in Consideration of Operator Status and Terminal Status

The remote operator O can be in a status appropriate for a remote operation and in a status otherwise. If the first remote operator O-X in a status inappropriate for the remote operation is selected, the accuracy of the remote operation decreases. Similarly, the remote operator terminal 200 can also be in a status appropriate for the remote operation and in a status otherwise. If the first remote operator terminal 200-X inappropriate for the remote operation is used, the accuracy of the remote operation decreases.

In the first viewpoint, the assignment process is executed in consideration of the status of each remote operator O or the status of each remote operator terminal 200. Therefore, the status of each remote operator O or the status of each remote operator terminal 200 is quantified in the form of "score". The score is a quantitative parameter indicating a suitability for a remote operation. For example, the score is calculated in the range of 0 to 100. As the score increases, the suitability for the remote operation also increases. An appropriate first remote operator O-X and an appropriate first remote operator terminal 200-X each are selected based on a corresponding one of the scores, and are assigned to the remote operation of the target mobility device 100-X. Hereinafter, the first viewpoint will be described in more details.

### 4-1. Example of Score

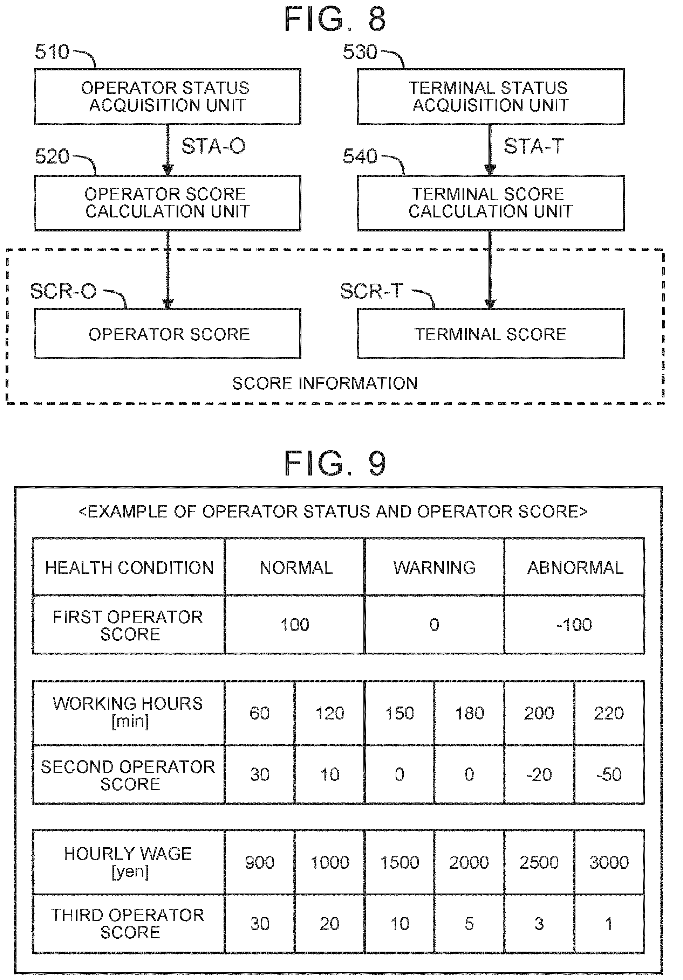

FIG. 8 is a block diagram that shows an example of the functional configuration concerned with score calculation.

### 4-1-1. Example of Operator Score

An operator status acquisition unit 510 acquires operator status information STA-O indicating the status of the remote operator O. An operator score calculation unit 520 calculates an operator score SCR-O based on the operator status information STA-O. The operator score SCR-O indicates the suitability of the remote operator O for the remote operation.

FIG. 9 shows an example of operator status and operator score SCR-O.

In a first example, the operator status acquisition unit 510 acquires the health condition of the remote operator O. In other words, the status of the remote operator O includes the health condition of the remote operator O. For example, the remote operator O reports his or her own health condition by using the remote operator terminal 200 or his or her own terminal (for example, smartphone). In another example, the operator sensor 240 may be used to detect the health condition of the remote operator O. The operator sensor 240 may be included in the remote operator terminal 200 (see FIG. 5) or may be included in a terminal (for example, smartphone) owned by the remote operator O. The operator sensor 240 includes a biometric sensor that detects biometric information of the remote operator O. Examples of the biometric information include body temperature, heart rate, blood pressure, and sweat rate. The operator status acquisition unit 510 acquires biometric information detected by the operator sensor 240. The operator status acquisition unit 510 acquires the health condition of the remote operator O based on the biometric information of the remote operator O. For example, the health condition is obtained from the biometric information by using a machine learning model. The operator score calculation unit 520 calculates a first operator score based on the health condition of the remote operator O. As shown in FIG. 9, the first operator score increases as the health condition of the remote operator O gets better.

In a second example, the operator status acquisition unit 510 acquires working hours during which the remote operator O is involved in a remote operation in a past certain period. In other words, the status of the remote operator O includes working hours during which the remote operator O is involved in a remote operation in a past certain period. The working hours can be obtained from, for example, an operation log recorded in the remote operator terminal 200 operated by the remote operator O in the past. Alternatively, the working hours can be obtained from the work history of each of the remote operators O, included in the operator management information MGT-O. The operator score calculation unit 520 calculates a second operator score based on the working hours of the remote operator O. As shown in FIG. 9, the second operator score decreases as the working hours of the remote operator O increase.

In a third example, the operator status acquisition unit 510 acquires the hourly wage of the remote operator O. In other words, the status of the remote operator O includes the hourly wage of the remote operator O. For example, the remote operator O registers his or her own hourly wage by using the remote operator terminal 200 or his or her own terminal (for example, smartphone). The hourly wage of each remote operator O may be registered in advance in the operator management information MGT-O and acquired from the operator management information MGT-O. The operator score calculation unit 520 calculates a third operator score based on the hourly wage of the remote operator O. As shown in FIG. 9, the third operator score increases as the hourly wage of the remote operator O decreases.

Combinations of two or more of the first to third examples are also applicable. In this case, the scores are added up.

Typically, the operator status acquisition unit 510 acquires in real time the operator status information STA-O indicating the status of the remote operator O. The operator score calculation unit 520 calculates in real time an operator score SCR-O based on the operator status information STA-O.

The operator status acquisition unit 510 and the operator score calculation unit 520 may be included in the remote operator terminal 200, may be included in the management system 300, or may be distributed in the remote operator terminal 200 and the management system 300. When the operator status acquisition unit 510 is included in the management system 300, the remote operator terminal 200 transmits the biometric information, information on working hours, and the like of the remote operator O to the management system 300. When the operator status acquisition unit 510 and the operator score calculation unit 520 are included in the remote operator terminal 200, the remote operator terminal 200 may just transmit information on the operator score SCR-O to the management system 300. In this case, the biometric information, information on working hours, and the like of the remote operator O do not need to be transmitted to the management system 300, so communication traffic between the remote operator terminal 200 and the management system 300 is reduced. This contributes to a reduction in communication resources used.

### 4-1-2. Example of Terminal Score

A terminal status acquisition unit 530 acquires terminal status information STA-T indicating the status of the remote operator terminal 200. A terminal score calculation unit 540 calculates a terminal score SCR-T based on the terminal status information STA-T. The terminal score SCR-T indicates the suitability of the remote operator terminal 200 for a remote operation.

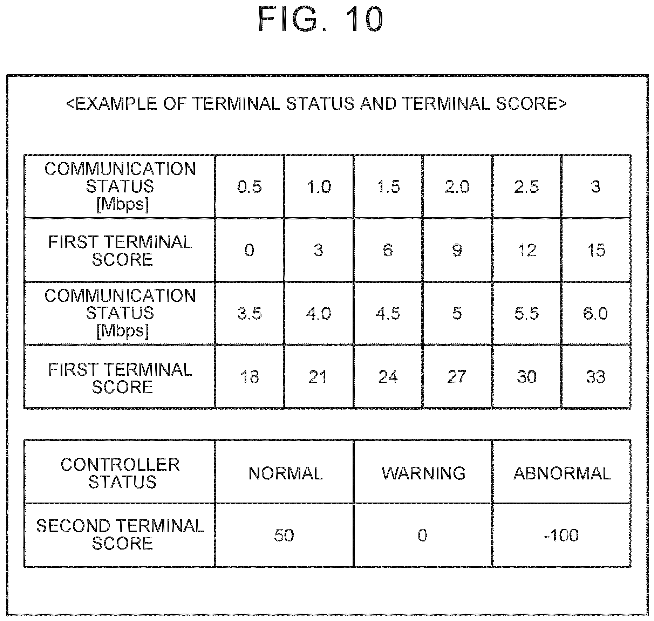

FIG. 10 shows an example of terminal status and terminal score SCR-T.

In a first example, the terminal status acquisition unit 530 acquires the communication status of the remote operator terminal 200. In other words, the status of the remote operator terminal 200 includes the communication status of the remote operator terminal 200. Examples of the communication status include communication speed (throughput) and communication delay. The remote operator terminal 200 is capable of measuring a communication speed, a communication delay, and the like based on a reception status of data received from one on the other side of communication. In another example, the remote operator terminal 200 measures a communication speed, a communication delay, and the like based on data transmitted to one on the other side of communication and feedback from the one on the other side of communication. The terminal status acquisition unit 530 acquires the communication status measured by the remote operator terminal 200. The terminal score calculation unit 540 calculates a first terminal score based on the communication status of the remote operator terminal 200. As shown in FIG. 10, the first terminal score increases as the communication status of the remote operator terminal 200 gets better.

In a second example, the terminal status acquisition unit 530 acquires an abnormality level of the controller 250 (see FIG. 5) of the remote operator terminal 200. In other words, the status of the remote operator terminal 200 includes the abnormality level of the controller 250 of the remote operator terminal 200. For example, the controller 250 includes a self-diagnosis function. The terminal status acquisition unit 530 acquires a self-diagnosis result (normal, warning, or abnormal) by the self-diagnosis function of the controller 250. The terminal score calculation unit 540 calculates a second terminal score based on the abnormality level of the controller 250 of the remote operator terminal 200. As shown in FIG. 10, the second terminal score decreases as the abnormality level of the controller 250 of the remote operator terminal 200 increases.

A combination of the first example and the second example is also possible. In this case, the scores are added up.

Typically, the terminal status acquisition unit 530 acquires in real time terminal status information STA-T indicating the status of the remote operator terminal 200. The terminal score calculation unit 540 calculates in real time a terminal score SCR-T based on the terminal status information STA-T.

The terminal status acquisition unit 530 and the terminal score calculation unit 540 may be included in the remote operator terminal 200, may be included in the management system 300, or may be distributed in the remote operator terminal 200 and the management system 300. When the terminal status acquisition unit 530 is included in the management system 300, the remote operator terminal 200 transmits a communication status and information on the abnormality level of the controller 250 to the management system 300. When the terminal status acquisition unit 530 and the terminal score calculation unit 540 are included in the remote operator terminal 200, the remote operator terminal 200 may just transmit information on the terminal score SCR-T to the management system 300. In this case, it is not necessary to transmit the communication status of the remote operator terminal 200 or information on the abnormality level of the controller 250 to the management system 300, so communication traffic between the remote operator terminal 200 and the management system 300 is reduced. This contributes to a reduction in communication resources used.

### 4-1-3. Integrated Score

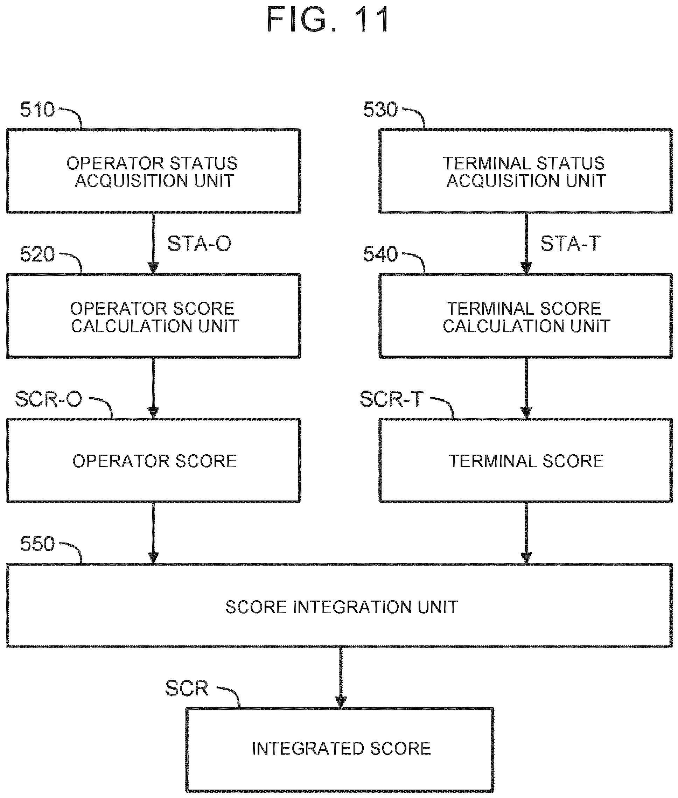

FIG. 11 is a block diagram that shows another example of the functional configuration concerned with score calculation. A score integration unit 550 calculates an integrated score SCR by integrating an operator score SCR-O with a terminal score SCR-T. In other words, an integrated score SCR incorporates an operator score SCR-O and a terminal score SCR-T. The integrated score SCR indicates a suitability of a combination of the remote operator O with the remote operator terminal 200 for a remote operation. As the integrated score SCR increases, the suitability increases.

For example, the score integration unit 550 calculates an average value of the operator score SCR-O and the terminal score SCR-T. When the average value is less than 100, the average value is used as the integrated score SCR. On the other hand, when the average value is greater than or equal to 100, the integrated score SCR is uniformly set to 100.

The score integration unit 550 may be included in the remote operator terminal 200 or may be included in the management system 300. All of the operator status acquisition unit 510, the operator score calculation unit 520, the terminal status acquisition unit 530, the terminal score calculation unit 540, and the score integration unit 550 may be included in the remote operator terminal 200. In this case, the remote operator terminal 200 may just transmit information on the integrated score SCR to the management system 300. Therefore, communication traffic between the remote operator terminal 200 and the management system 300 is reduced. This contributes to a reduction in communication resources used.

### 4-2. Assignment Process

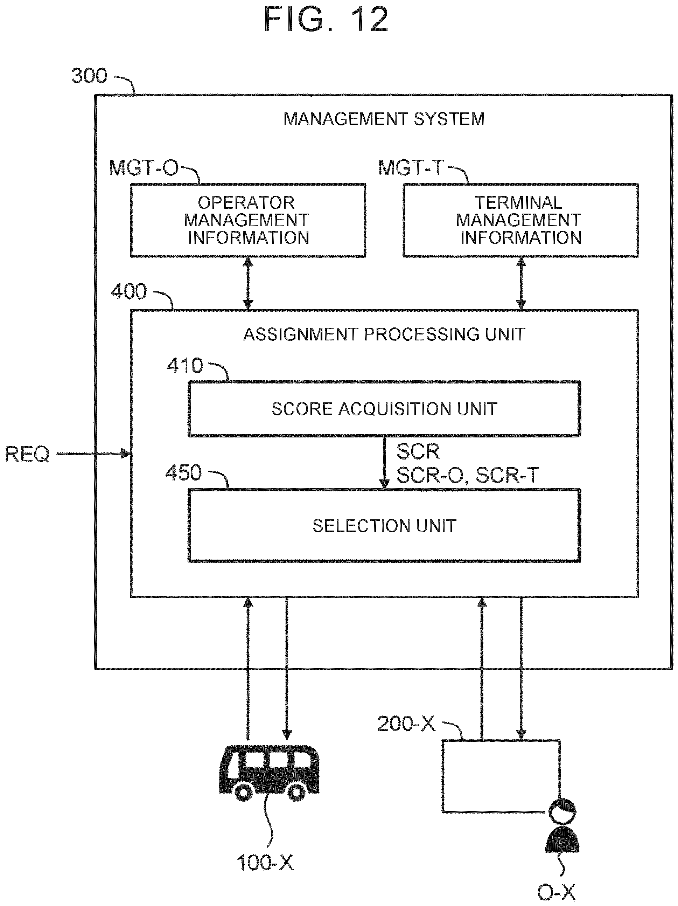

FIG. 12 is a block diagram that shows a functional configuration example concerned with the assignment process in the first viewpoint. The assignment processing unit 400 of the management system 300 includes a score acquisition unit 410 and a selection unit 450.

The score acquisition unit 410 acquires an operator score SCR-O from the operator score calculation unit 520. More specifically, the score acquisition unit 410 acquires the operator score SCR-O of each of the remote operators O, indicated by the operator management information MGT-O. The score acquisition unit 410 may register the operator score SCR-O of each of the remote operators O in the operator management information MGT-O. Typically, the score acquisition unit 410 acquires in real time the operator score SCR-O of each of the remote operators O.

The selection unit 450 selects an appropriate first remote operator O-X from among the remote operators O based on the operator score SCR-O and the operator management information MGT-O. More specifically, the selection unit 450 extracts available (free) remote operators O from among the remote operators O based on the operator management information MGT-O. In addition, the selection unit 450 selects a first remote operator O-X from among the available remote operators O based on the operator score SCR-O. For example, the selection unit 450 preferentially selects the remote operator O with a higher operator score SCR-O as a first remote operator O-X. In other words, the operator score SCR-O is used as operator priority level. When there is a plurality of candidates having the same operator score SCR-O, the selection unit 450 may preferentially select the remote operator O longer in waiting time as a first remote operator O-X. The selected first remote operator O-X is assigned to the remote operation of the target mobility device 100-X.

The score acquisition unit 410 acquires a terminal score SCR-T from the terminal score calculation unit 540. More specifically, the score acquisition unit 410 acquires the terminal score SCR-T of each of the remote operator terminals 200, indicated by the terminal management information MGT-T. The score acquisition unit 410 may register the terminal score SCR-T of each of the remote operator terminals 200 in the terminal management information MGT-T. Typically, the score acquisition unit 410 acquires in real time the terminal score SCR-T of each of the remote operator terminals 200.

The selection unit 450 selects an appropriate first remote operator terminal 200-X from among the remote operator terminals 200 based on the terminal score SCR-T and the terminal management information MGT-T. More specifically, the selection unit 450 extracts available (free) remote operator terminals 200 from among the remote operator terminals 200 based on the terminal management information MGT-T. In addition, the selection unit 450 selects a first remote operator terminal 200-X from among the available remote operator terminals 200 based on the terminal score SCR-T. For example, the selection unit 450 preferentially selects the remote operator terminal 200 with a higher terminal score SCR-T as a first remote operator terminal 200-X. In other words, the terminal score SCR-T is used as terminal priority level. When there is a plurality of candidates having the same terminal score SCR-T, the selection unit 450 may preferentially select the remote operator terminal 200 longer in waiting time as a first remote operator terminal 200-X. Then, the selected first remote operator terminal 200-X is assigned to the remote operation of the target mobility device 100-X.

Alternatively, in the case of the example shown in FIG. 11, the score acquisition unit 410 acquires an integrated score SCR from the score integration unit 550. More specifically, the score acquisition unit 410 acquires the integrated score SCR of each of multiple combinations of the remote operator O and the remote operator terminal 200. Typically, the score acquisition unit 410 acquires in real time the integrated score SCR of each of multiple combinations of the remote operator O and the remote operator terminal 200.

The selection unit 450 selects an appropriate combination of the first remote operator O-X with the first remote operator terminal 200-X based on the integrated score SCR, the operator management information MGT-O, and the terminal management information MGT-T. More specifically, the selection unit 450 extracts available (free) remote operators O from among the remote operators O based on the operator management information MGT-O. The selection unit 450 extracts available (free) remote operator terminals 200 from among the remote operator terminals 200 based on the terminal management information MGT-T. In addition, based on the integrated score SCR, the selection unit 450 selects a first remote operator O-X from among the available remote operators O and selects a first remote operator terminal 200-X from among the available remote operator terminals 200. For example, the selection unit 450 preferentially selects a combination of the remote operator O and the remote operator terminal 200 with a higher integrated score SCR as a combination of the first remote operator O-X with the first remote operator terminal 200-X. In other words, the integrated score SCR is used as priority level. When there is a plurality of candidates having the same integrated score SCR, the selection unit 450 may preferentially select a combination including the remote operator O longer in waiting time. Then, the selected combination of the first remote operator O-X with the first remote operator terminal 200-X is assigned to the remote operation of the target mobility device 100-X.

### 4-3. Advantageous Effects

As described above, according to the first viewpoint, an operator score SCR-O indicating a suitability of a remote operator O for a remote operation is calculated based on the status of the remote operator O. Then, a first remote operator O-X to be assigned to the remote operation of a target mobility device 100-X is selected based on the operator score SCR-O. In other words, an appropriate first remote operator O-X is assigned to the remote operation of a target mobility device 100-X in consideration of the suitability. Thus, the accuracy of the remote operation of the target mobility device 100-X is ensured.

A terminal score SCR-T indicating a suitability of a remote operator terminal 200 for a remote operation is calculated based on the status of the remote operator terminal 200. Then, a first remote operator terminal 200-X to be assigned to the remote operation of a target mobility device 100-X is selected based on the terminal score SCR-T. In other words, an appropriate first remote operator terminal 200-X is assigned to the remote operation of a target mobility device 100-X in consideration of the suitability. Thus, the accuracy of the remote operation of the target mobility device 100-X is ensured.

Score calculation may be performed by the remote operator terminal 200. In this case, the remote operator terminal 200 may just transmit score information to the management system 300. Therefore, communication traffic between the remote operator terminal 200 and the management system 300 is reduced. This contributes to a reduction in communication resources used.

### 5. [Second Viewpoint]

### Assignment Process in Consideration of Operator Licenses

A case where there are multiple types of mobility devices 100 as targets for remote operations will be considered (see FIG. 2). A remote operator O does not always have licenses (qualifications and authorizations) related to all the types of mobility devices 100. If a remote operator O that does not hold a license for operating a target mobility device 100-X is erroneously assigned to a remote operation of the target mobility device 100-X, the assignment process needs to be executed again from the beginning, so it is inefficient.

In the second viewpoint, the assignment process is executed in consideration of licenses held by each of the remote operators O. More specifically, the first remote operator O-X that holds a required license required from the remote operation of the target mobility device 100-X is assigned to the remote operation of the target mobility device 100-X. Hereinafter, the second viewpoint will be described in more details.

### 5-1. Operator License Information

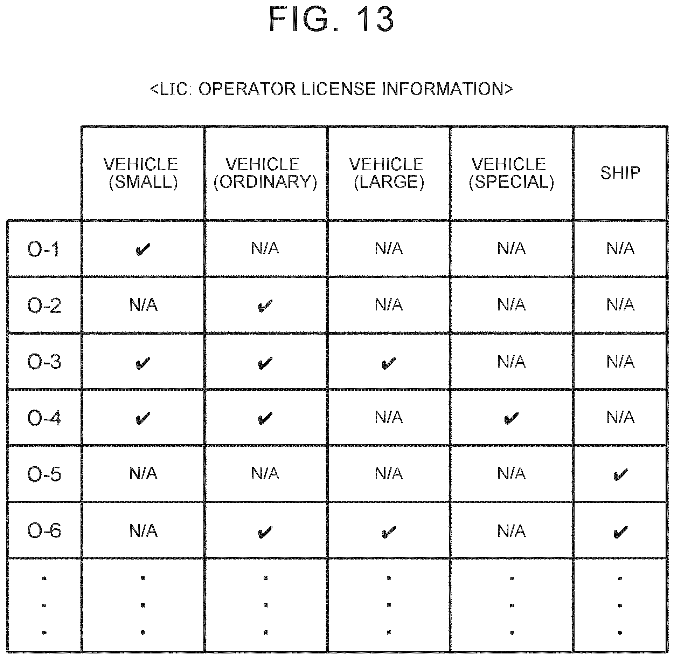

FIG. 13 shows an example of operator license information LIC. The operator license information LIC indicates licenses (qualifications and authorizations) held by each of the remote operators O in relation to operation (driving) of multiple types of mobility devices 100. In other words, the operator license information LIC indicates licenses held for each remote operator O. A license for one mobility device 100 is to officially permit to operate the mobility device 100. Each of the remote operators O holds licenses for one or more types of mobility devices 100. A remote operator O may hold licenses for two or more types of mobility devices 100. Licenses held can vary among remote operators O.

The operator license information LIC is included in the operator management information MGT-O. For example, each of the remote operators O reports licenses held by itself by using the remote operator terminal 200 or his or her own terminal. The management system 300 generates operator license information LIC in advance and, where necessary, updates the operator license information LIC by collecting information on licensees held by each of the remote operators O.

### 5-2. Assignment Process

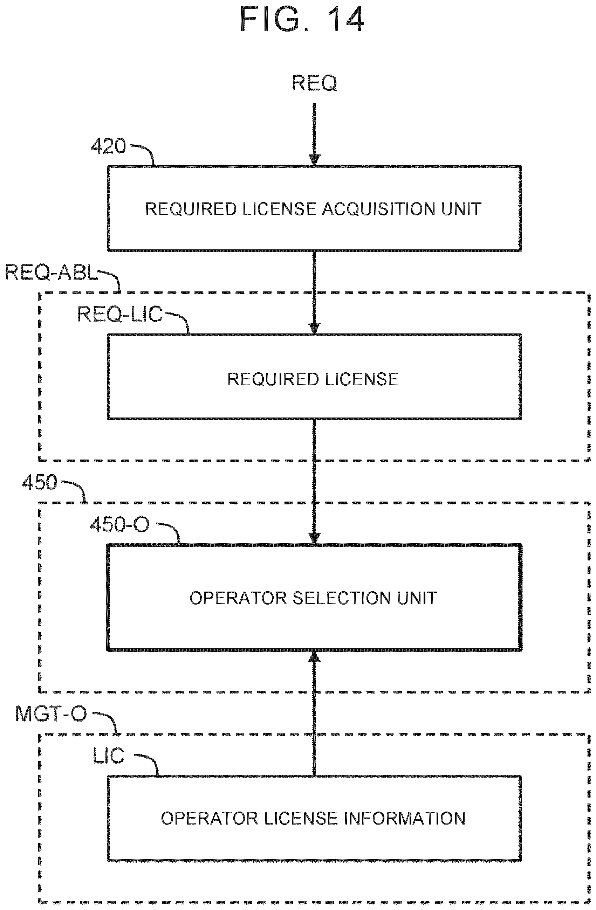

FIG. 14 is a block diagram that shows a functional configuration example concerned with the assignment process in the second viewpoint. The assignment processing unit 400 of the management system 300 includes a required license acquisition unit 420 and a selection unit 450.

The required license acquisition unit 420 receives a remote operation request REQ. The remote operation request REQ indicates the type of a target mobility device 100-X. The required license acquisition unit 420 is capable of recognizing a "required license REQ-LIC" required from the remote operation of the target mobility device 100-X based on the type of the target mobility device 100-X.

Required capability information REQ-ABL indicates a capability required from the remote operation of the target mobility device 100-X. The required capability information REQ-ABL includes at least information on the required license REQ-LIC.

The selection unit 450 includes an operator selection unit 450-O. The operator selection unit 450-0 selects an appropriate first remote operator O-X from among the remote operators O based on the operator management information MGT-O and the required capability information REQ-ABL. More specifically, the operator selection unit 450-0 extracts available (free) remote operators O from among the remote operators O based on the operator management information MGT-O. In addition, the operator selection unit 450-0 acquires the operator license information LIC included in the operator management information MGT-O and the information on the required license REQ-LIC, included in the required capability information REQ-ABL. Then, the operator selection unit 450-O selects a first remote operator O-X holding the required license REQ-LIC from among the available remote operators O based on the operator license information LIC and the required license REQ-LIC. The selected first remote operator O-X is assigned to the remote operation of the target mobility device 100-X.

When there is a plurality of remote operators O holding the required license REQ-LIC, the operator selection unit 450-O may select a first remote operator O-X in consideration of the operator score SCR-O described in Section 4. More specifically, the operator selection unit 450-O may preferentially select the remote operator O with a higher operator score SCR-O as a first remote operator O-X. When there is a plurality of candidates having the same operator score SCR-O, the operator selection unit 450-O may preferentially select the remote operator O longer in waiting time as a first remote operator O-X.

In another example, when there is a plurality of remote operators O holding the required license REQ-LIC, the operator selection unit 450-O may select the remote operator O holding the least number of types of licenses as the current first remote operator O-X. In this case, remote operators O holding licenses for more number of types of mobility devices 100 are conserved. As a result, this increases the probability that an appropriate remote operator O can be assigned to a subsequent target mobility device 100-X that requires a remote operation.

### 5-3. Advantageous Effects

As described above, according to the second viewpoint, licenses held by each of the remote operators O and a required license REQ-LIC required from a remote operation of a target mobility device 100-X are considered. Then, a first remote operator OX holding the required license REQ-LIC is assigned to the remote operation of the target mobility device 100-X. Thus, the accuracy of the remote operation of the target mobility device 100-X is ensured. A situation in which a remote operator O that does not hold the required license REQ-LIC is erroneously assigned to the target mobility device 100-X is avoided before it happens. Thus, it is not necessary to execute the assignment process again from the beginning, so an efficient assignment process is implemented.

### 6. [Third Viewpoint]

### Assignment Process in Consideration of Terminal Specifications

Specifications required of the remote operator terminal 200 can vary depending on the type of a target mobility device 100-X. Specifications required of the remote operator terminal 200 can vary also depending on the content of a remote operation required. If the remote operator terminal 200 that does not satisfy specifications required from a remote operation of a target mobility device 100-X is assigned to the remote operation of the target mobility device 100-X, the accuracy of the remote operation decreases. It is inefficient to execute the assignment process again from the beginning.

In the third viewpoint, the assignment process is executed in consideration of the specifications of each of the remote operator terminals 200. More specifically, a first remote operator terminal 200-X that satisfies required terminal specifications required from a remote operation of a target mobility device 100-X is assigned to the remote operation of the target mobility device 100-X. Hereinafter, the third viewpoint will be described in more details.

### 6-1. First Example

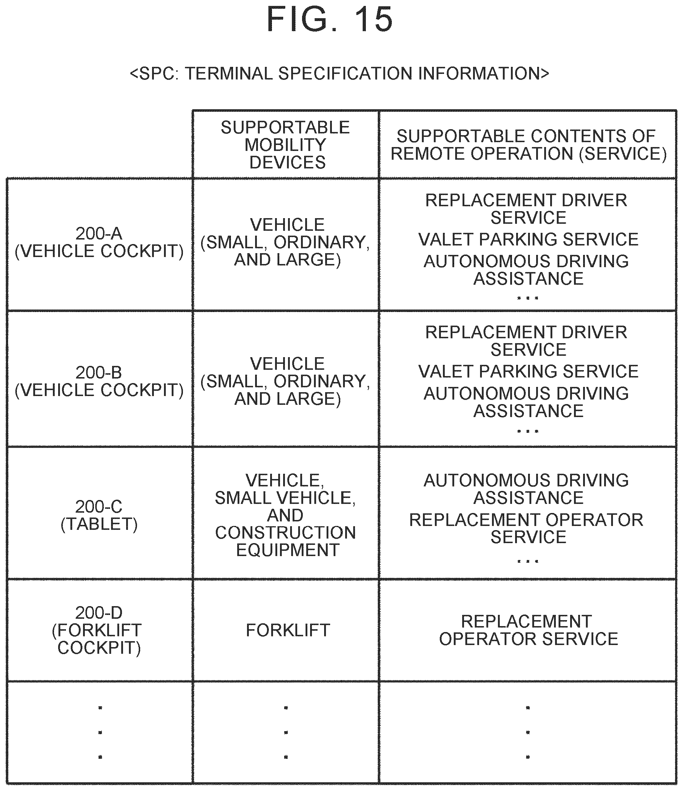

FIG. 15 shows an example of terminal specification information SPC. The terminal specification information SPC indicates the specifications of each of the remote operator terminals 200. In the example shown in FIG. 15, the terminal specification information SPC indicates the type of remote operator terminal 200, the types of supportable mobility device 100, and the contents of supportable remote operation (service) for each remote operator terminal 200.

Examples of the type of remote operator terminal 200 include a cockpit terminal, a PC, a tablet, and a smartphone. When the type of remote operator terminal 200 changes, the types of supportable mobility device 100 and/or the contents of supportable remote operation also change. For example, a cockpit terminal is suitable for remote operations of various types of vehicles and also suitable for driving on public roads and long-distance driving. On the other hand, a tablet is not always suitable for driving on public roads and long-distance driving. A tablet can be used in short-distance driving of a vehicle in a limited area, such as a parking area, autonomous driving assistance, such as a roadside retreat in an emergency, a remote operation of a small vehicle in a factory, or the like.

The terminal specification information SPC is included in the terminal management information MGT-T. For example, the management system 300 collects information on type from each of the remote operator terminals 200. Then, the management system 300 generates in advance terminal specification information SPC illustrated in FIG. 15 and updates the terminal specification information SPC as needed, based on the type of each of the remote operator terminals 200.

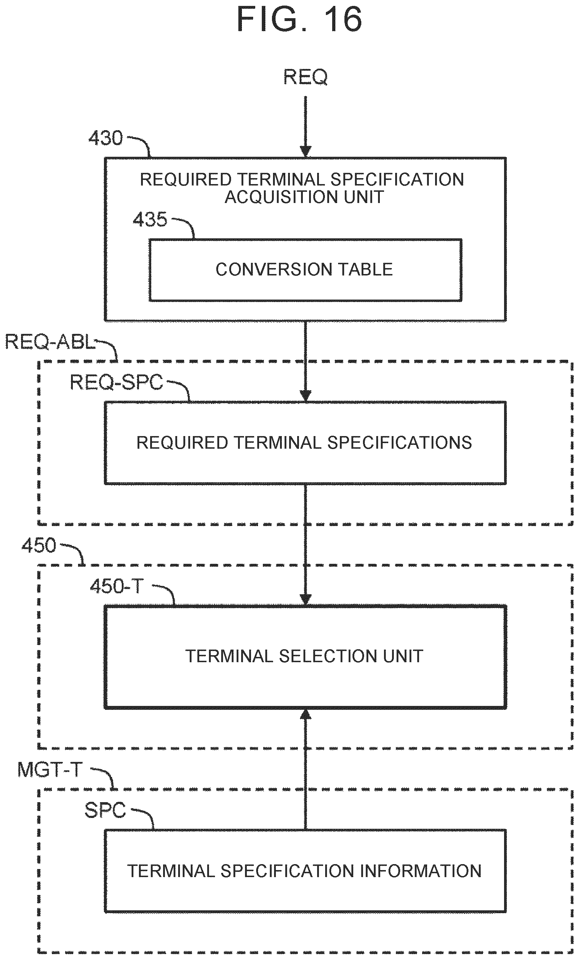

FIG. 16 is a block diagram that shows a functional configuration example concerned with the assignment process in the third viewpoint. The assignment processing unit 400 of the management system 300 includes a required terminal specification acquisition unit 430 and a selection unit 450.

The required terminal specification acquisition unit 430 receives a remote operation request REQ. The remote operation request REQ indicates at least one of "the type of the target mobility device 100-X" and "a desired content of remote operation of the target mobility device 100-X". The required terminal specification acquisition unit 430 can recognize the "required terminal specification REQ-SPC" required from the remote operation of the target mobility device 100-X based on the remote operation request REQ. In this example, the remote operation request REQ is directly used as the required terminal specifications REQ-SPC.

The required capability information REQ-ABL indicates a capability required from the remote operation of the target mobility device 100-X. The required capability information REQ-ABL includes at least information on the required terminal specifications REQ-SPC.

The selection unit 450 includes a terminal selection unit 450-T. The terminal selection unit 450-T selects an appropriate first remote operator terminal 200-X from among the remote operator terminals 200 based on the terminal management information MGT-T and the required capability information REQ-ABL. More specifically, the terminal selection unit 450-T extracts available (free) remote operator terminals 200 from among the remote operator terminals 200 based on the terminal management information MGT-T. In addition, the terminal selection unit 450-T acquires terminal specification information SPC included in the terminal management information MGT-T and information on the required terminal specifications REQ-SPC, included in the required capability information REQ-ABL. Then, the terminal selection unit 450-T selects a first remote operator terminal 200-X that satisfies the required terminal specifications REQ-SPC from among the available remote operator terminals 200, based on the terminal specification information SPC and the required terminal specifications REQ-SPC. The selected first remote operator terminal 200-X is assigned to the remote operation of the target mobility device 100-X.

When there is a plurality of remote operator terminals 200 that satisfy the required terminal specifications REQ-SPC, the terminal selection unit 450-T may select a first remote operator terminal 200-X in consideration of the terminal score SCR-T described in Section 4. More specifically, the terminal selection unit 450-T may preferentially select the remote operator terminal 200 with a higher terminal score SCR-T as a first remote operator terminal 200-X. When there is a plurality of candidates having the same terminal score SCR-T, the terminal selection unit 450-T may preferentially select the remote operator terminal 200 longer in waiting time as a first remote operator terminal 200-X.

### 6-2. Second Example

It is conceivable to prepare an exclusive remote operator terminal 200 (remote cockpit) for each type of mobility device 100. On the other hand, if it is possible to perform remote operations of various types of mobility devices 100 with a single remote operator terminal 200, it is preferable from the viewpoint of cost reduction, reduction in installation area, efficiency, convenience, and the like. In a second example, remote operations of various types of mobility devices 100 with a single remote operator terminal 200 will be considered. Therefore, the specifications (equipment) of the remote operator terminal 200 is more abstractly captured again. More specifically, as will be described below, the specifications (equipment) of the remote operator terminal 200 are defined as "operational system capability" and "display system capability". The description overlapping that of the above-described first example is omitted as needed.

### 6-2-1. Operational System Capability

The input device 230 (see FIG. 5) of the remote operator terminal 200 includes a remote operating member that the remote operator O performs a remote operation to perform operation at the time of performing the remote operation of the mobility device 100. Examples of the remote operating member include a handle (steering wheel), an accelerator pedal, a brake pedal, a joystick, an arrow key, and a touch panel. Even when the physical structure of the remote operating member is different, the application of the remote operating member is common. In other words, the remote operating member is used to perform the longitudinal operation and lateral operation of the target mobility device 100-X. Thus, one remote operating member can be substituted by another remote operating member.

For example, forward operation, backward operation, and lateral operation of a joystick respectively correspond to operation of the accelerator pedal, operation of the brake pedal, and operation of the handle. In another example, the operational systems of various types of mobility devices 100 can be reproduced by a user interface displayed on a touch panel. Even in any case, an operation amount of one remote operating member can be converted to an operation amount of another remote operating member. Thus, one remote operating member can be substituted by another remote operating member.

From the above-described viewpoints, the operational system capability of the remote operator terminal 200 is defined. Specifically, the operational system capability of the remote operator terminal 200 includes "the number of inputs for longitudinal operation of the mobility device 100" and "the number of inputs for lateral operation of the mobility device 100". The operational system capability of the remote operator terminal 200 may further include "the presence or absence of operation feedback". The presence or absence of operation feedback means whether the remote operator terminal 200 includes an operation reaction force mechanism capable of generating operation reaction force to the remote operator O.

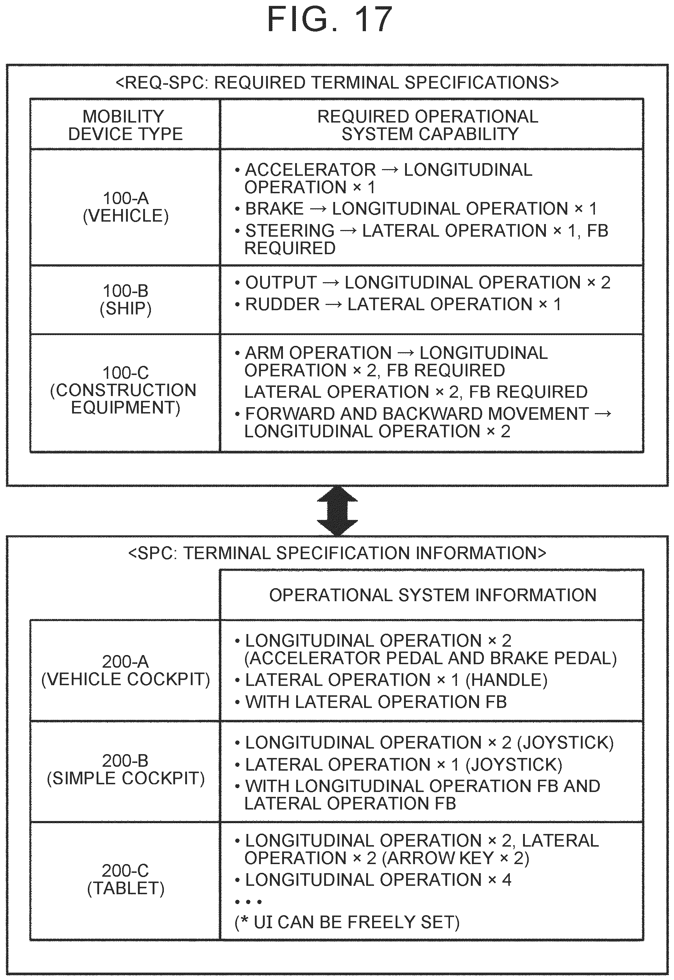

FIG. 17 is a diagram that shows an example of the terminal specification information SPC and the required terminal specifications REQ-SPC in relation to the operational system. As shown in FIG. 17, the terminal specification information SPC includes operational system information that indicates the operational system capability of each of the remote operator terminals 200. For example, the number of inputs of longitudinal operation of the remote operator terminal 200 including an accelerator pedal and a brake pedal is "2". In another example, the number of inputs of longitudinal operation of the remote operator terminal 200 including a joystick is "2". In a case of a tablet capable of displaying a selected user interface on a touch panel, the operational system capability can be freely set.

The required terminal specifications REQ-SPC include an operational system capability required from a remote operation of a target mobility device 100-X. As shown in FIG. 17, when the type (such as vehicle, ship, and construction equipment) of the target mobility device 100-X varies, a required operational system capability also changes. Even when the type of the target mobility device 100-X is the same, a required operational system capability can vary depending on a desired content of remote operation (such as long-distance driving and roadside retreat).

The required terminal specification acquisition unit 430 receives a remote operation request REQ. The remote operation request REQ indicates at least one of "the type of the target mobility device 100-X" and "a desired content of remote operation of the target mobility device 100-X". The required terminal specification acquisition unit 430 can recognize the required terminal specifications REQ-SPC including an operational system capability required from the remote operation of the target mobility device 100-X, based on the remote operation request REQ.

For example, a conversion table 435 that shows the correspondence relationship between a remote operation request REQ and required terminal specifications REQ-SPC is prepared in advance (see FIG. 16). The conversion table 435 is stored in advance in the storage device 370 of the management system 300. The required terminal specification acquisition unit 430 can recognize the required terminal specifications REQ-SPC corresponding to the remote operation request REQ by consulting the conversion table 435.

The terminal selection unit 450-T acquires the terminal specification information SPC and information on the required terminal specifications REQ-SPC. Then, the terminal selection unit 450-T selects a first remote operator terminal 200-X that satisfies the required terminal specifications REQ-SPC from among the available remote operator terminals 200, based on the terminal specification information SPC and the required terminal specifications REQ-SPC. More specifically, the terminal selection unit 450-T selects a first remote operator terminal 200-X having at least a required operational system capability based on the terminal specification information SPC (operational system information) and the required terminal specifications REQ-SPC. The selected first remote operator terminal 200-X is assigned to the remote operation of the target mobility device 100-X.

When there is a plurality of remote operator terminals 200 having a required operational system capability, the terminal selection unit 450-T may select a first remote operator terminal 200-X in consideration of the terminal score SCR-T described in Section 4. More specifically, the terminal selection unit 450-T may preferentially select the remote operator terminal 200 with a higher terminal score SCR-T as a first remote operator terminal 200-X. When there is a plurality of candidates having the same terminal score SCR-T, the terminal selection unit 450-T may preferentially select the remote operator terminal 200 longer in waiting time as a first remote operator terminal 200-X.

In another example, when there is a plurality of remote operator terminals 200 that satisfy a required operational system capability, the terminal selection unit 450-T may select the remote operator terminal 200 with a minimum operational system capability as the current first remote operator terminal 200-X. In this case, the remote operator terminals 200 with a higher operational system capability is conserved. As a result, even when a high operational system capability is required in relation to a remote operation of a subsequent target mobility device 100-X, this increases the probability that an appropriate remote operator terminal 200 can be assigned.

In a modification, in a specific situation, the terminal selection unit 450-T may select the remote operator terminal 200 that slightly does not reach a required operational system capability as a first remote operator terminal 200-X. A case where there is no other choice in an emergency is conceivable as a specific situation. For example, operation feedback is preferably provided; however, a remote operator terminal 200 with no operation feedback may be selected as a first remote operator terminal 200-X in an emergency. In this case, the terminal selection unit 450-T provides instructions on function restriction to the target mobility device 100-X and the first remote operator terminal 200-X. The function restriction is presumably lowering an upper limit speed to a limited value lower than a default value, narrowing a steering range to a limited range narrower than a default range, or the like. Instructions on the target mobility device 100-X and the first remote operator terminal 200-X are issued through communication.

### 6-2-2. Display System Capability

There are various types of display devices 220 (see FIG. 5) of the remote operator terminals 200. For example, the number of monitors included in the display device 220 can vary among the remote operator terminals 200. There are also various resolutions (sizes) of monitors. When the resolution (size) of the monitor is large, multiple types of videos can be displayed in a single monitor at the same time. When the controller 250 of the remote operator terminal 200 has a Picture-in-Picture function, another video can be contained in a single video. From the above viewpoint, the display system capability of the remote operator terminal 200 is defined. Specifically, the display system capability of the remote operator terminal 200 includes "the number of monitors" and "the number of videos that can be displayed at the same time".

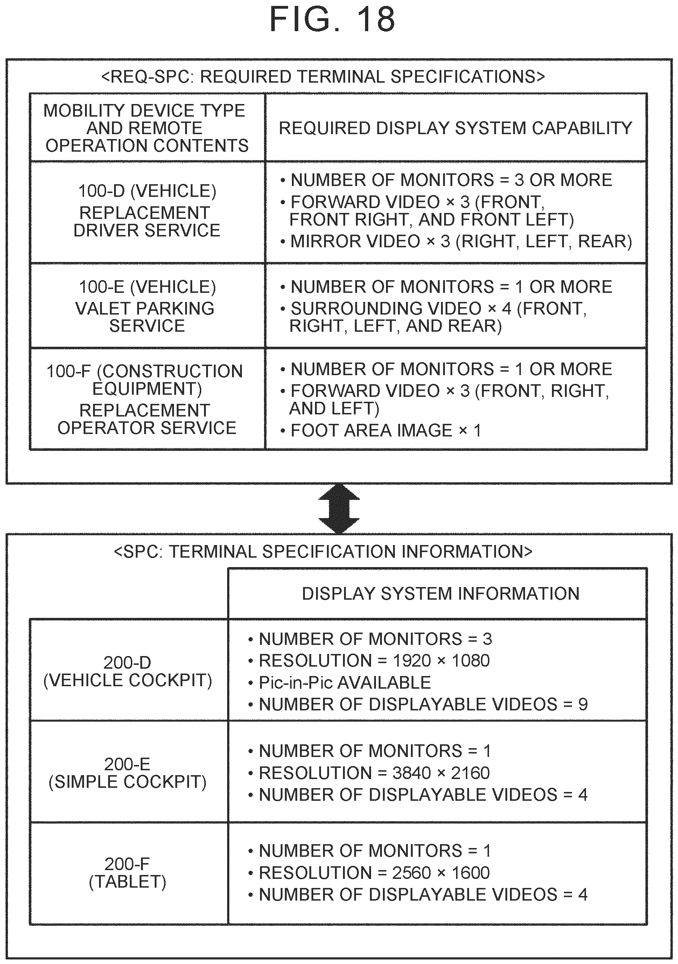

FIG. 18 is a diagram that shows an example of the terminal specification information SPC and the required terminal specifications REQ-SPC in relation to the display system. As shown in FIG. 18, the terminal specification information SPC includes display system information that indicates the display system capability of each of the remote operator terminals 200.

The required terminal specifications REQ-SPC include a display system capability required from a remote operation of a target mobility device 100-X. As shown in FIG. 18, when the type (such as vehicle and construction equipment) of the target mobility device 100-X varies, a required display system capability also changes. Even when the type of the target mobility device 100-X is the same, a required display system capability can vary depending on a desired content of remote operation (such as replacement driver service and valet parking service).

The required terminal specification acquisition unit 430 receives a remote operation request REQ. The remote operation request REQ indicates at least one of "the type of the target mobility device 100-X" and "a desired content of remote operation of the target mobility device 100-X". The required terminal specification acquisition unit 430 can recognize the required terminal specifications REQ-SPC including a display system capability required from the remote operation of the target mobility device 100-X, based on the remote operation request REQ.

For example, the conversion table 435 that shows the correspondence relationship between a remote operation request REQ and required terminal specifications REQ-SPC is prepared in advance (see FIG. 16). The conversion table 435 is stored in advance in the storage device 370 of the management system 300. The required terminal specification acquisition unit 430 can recognize the required terminal specifications REQ-SPC corresponding to the remote operation request REQ by consulting the conversion table 435.

The terminal selection unit 450-T acquires the terminal specification information SPC and information on the required terminal specifications REQ-SPC. Then, the terminal selection unit 450-T selects a first remote operator terminal 200-X that satisfies the required terminal specifications REQ-SPC from among the available remote operator terminals 200, based on the terminal specification information SPC and the required terminal specifications REQ-SPC. More specifically, the terminal selection unit 450-T selects a first remote operator terminal 200-X having at least a required display system capability based on the terminal specification information SPC (display system information) and the required terminal specifications REQ-SPC. The selected first remote operator terminal 200-X is assigned to the remote operation of the target mobility device 100-X.

When there is a plurality of remote operator terminals 200 having a required display system capability, the terminal selection unit 450-T may select a first remote operator terminal 200-X in consideration of the terminal score SCR-T described in Section 4. More specifically, the terminal selection unit 450-T may preferentially select the remote operator terminal 200 with a higher terminal score SCR-T as a first remote operator terminal 200-X. When there is a plurality of candidates having the same terminal score SCR-T, the terminal selection unit 450-T may preferentially select the remote operator terminal 200 longer in waiting time as a first remote operator terminal 200-X.

In another example, when there is a plurality of remote operator terminals 200 that satisfy a required display system capability, the terminal selection unit 450-T may select the remote operator terminal 200 with a minimum display system capability as the current first remote operator terminal 200-X. In this case, the remote operator terminals 200 with a higher display system capability is conserved. As a result, even when a high display system capability is required in relation to a remote operation of a subsequent target mobility device 100-X, this increases the probability that an appropriate remote operator terminal 200 can be assigned.

In a modification, in a specific situation, the terminal selection unit 450-T may select the remote operator terminal 200 that slightly does not reach a required display system capability as a first remote operator terminal 200-X. A case where there is no other choice in an emergency is conceivable as a specific situation. For example, although three types of indispensable videos and two types of auxiliary videos are preferably intended to be displayed, the remote operator terminal 200 capable of displaying only three types of videos in an emergency may be selected as a first remote operator terminal 200-X. In this case, the terminal selection unit 450-T provides instructions on function restriction to the target mobility device 100-X and the first remote operator terminal 200-X. The function restriction is presumably lowering an upper limit speed to a limited value lower than a default value, narrowing a steering range to a limited range narrower than a default range, or the like. Instructions on the target mobility device 100-X and the first remote operator terminal 200-X are issued through communication.

The remote operator O is able to freely customize a display mode of video according to the content of the remote operation request REQ. The display mode of video includes layout, video display position, video size, the presence or absence of video display, and the like. The remote operator O is able to freely set the presence or absence of display of auxiliary images. Auxiliary images include vehicle width lines, a trajectory line, maximum turning lines, safety stop position, and the like.

### 6-3. Advantageous Effects

As described above, according to the third viewpoint, the specifications of each of the remote operator terminals 200 and required terminal specifications REQ-SPC required from a remote operation of a target mobility device 100-X are considered. Then, the first remote operator terminal 200-X that satisfies the required terminal specifications REQ-SPC is assigned to the remote operation of the target mobility device 100-X. Thus, the accuracy of the remote operation of the target mobility device 100-X is ensured. A situation in which a remote operator terminal 200 that does not have the required terminal specifications REQ-SPC is erroneously assigned to the target mobility device 100-X is avoided before it happens. Thus, it is not necessary to execute the assignment process again from the beginning, so an efficient assignment process is implemented.

## Claims

1. A remote operating system (1) for a remote operation of a mobility device, the remote operating system (1) comprising one or more processors configured to:
acquire terminal status information (STA-T) indicating a status of a remote operator terminal (200) configured to be used by a remote operator (O) for the remote operation; and
calculate a terminal score (SCR-T) indicating a suitability of the remote operator terminal (200) for the remote operation based on the terminal status information (STA-T), wherein the terminal score (SCR-T) is used to select a first remote operator terminal (200-X) to be assigned to the remote operation of a target mobility device (100-X).

2. The remote operating system (1) according to claim 1, wherein:
the status of the remote operator terminal (200) includes a communication status of the remote operator terminal (200); and
the terminal score (SCR-T) includes a first terminal score that increases as the communication status of the remote operator terminal (200) gets better.

3. The remote operating system (1) according to claim 1, wherein:
the status of the remote operator terminal (200) includes an abnormality level of a controller of the remote operator terminal (200); and
the terminal score (SCR-T) includes a second terminal score that decreases as the abnormality level increases.

4. The remote operating system (1) according to claim 1, wherein the one or more processors are configured to
acquire the terminal status information (STA-T) in real time, and
calculate the terminal score (SCR-T) in real time.

5. The remote operating system (1) according to any one of claims 1 to 4, wherein:
the one or more processors are configured to
acquire operator status information (STA-O) indicating a status of the remote operator (O), and
calculate an operator score (SCR-O) indicating a suitability of the remote operator (O) for the remote operation based on the operator status information (STA-O); and
the operator score (SCR-O) is used to select a first remote operator (O-X) to be assigned to the remote operation of the target mobility device (100-X).

6. The remote operating system (1) according to claim 5, wherein:
the status of the remote operator (O) includes a health condition of the remote operator (O); and
the operator score (SCR-O) includes a first operator score that increases as the health condition of the remote operator (O) gets better.

7. The remote operating system (1) according to claim 5, wherein:
the status of the remote operator (O) includes working hours during which the remote operator (O) is involved in the remote operation in a past certain period; and
the operator score (SCR-O) includes a second operator score that decreases as the working hours extend.

8. The remote operating system (1) according to claim 5, wherein:
the status of the remote operator (O) includes an hourly wage of the remote operator (O); and
the operator score (SCR-O) includes a third operator score that increases as the hourly wage decreases.

9. The remote operating system (1) according to claim 5, wherein the one or more processors are configured to
acquire the operator status information (STA-O) in real time, and
calculate the operator score (SCR-O) in real time.

10. The remote operating system (1) according to claim 5, wherein:
the one or more processors are configured to calculate an integrated score (SCR) by integrating the terminal score (SCR-T) with the operator score (SCR-O);
the integrated score (SCR) indicates a suitability of a combination of the remote operator terminal (200) for the remote operation and the remote operator (O) for the remote operation; and
the integrated score (SCR) is used to select a combination of the first remote operator (O-X) and the first remote operator terminal (200-X), to be assigned to the remote operation of the target mobility device (100-X).

11. The remote operating system (1) according to claim 5, wherein the one or more processors are configured to select a combination of the first remote operator (O-X) and the first remote operator terminal (200-X), to be assigned to the remote operation of the target mobility device (100-X), based on the terminal score (SCR-T) and the operator score (SCR-O).

12. The remote operating system (1) according to claim 11, wherein the one or more processors are configured to
acquire terminal specification information indicating specifications of each of a plurality of remote operator terminals (200),
acquire required capability information indicating required terminal specifications required from the remote operation of the target mobility device (100-X), and
select the combination of the first remote operator (O-X) and the first remote operator terminal (200-X) with the required terminal specifications, based on the terminal specification information, the required terminal specifications, the terminal score (SCR-T), and the operator score (SCR-O).

13. The remote operating system (1) according to claim 11, wherein:
there are multiple types of mobility devices; and
the one or more processors are configured to
acquire operator license information indicating a license held by each of a plurality of remote operators (O) in relation to an operation of the multiple types of the mobility devices,
acquire required capability information indicating a required license required from the remote operation of the target mobility device (100-X), and
select the combination of the first remote operator terminal (200-X) and the first remote operator (O-X) with the required license, based on the operator license information, the required license, the terminal score (SCR-T), and the operator score (SCR-O).

14. The remote operating system (1) according to claim 13, wherein:
the required capability information indicates required terminal specifications required from the remote operation of the target mobility device (100-X); and
the one or more processors are configured to
acquire terminal specification information indicating specifications of each of a plurality of remote operator terminals (200), and
select the combination of the first remote operator (O-X) having the required license and the first remote operator terminal (200-X) having the required terminal specifications, based on the operator license information, the terminal specification information, the required capability information, the terminal score (SCR-T), and the operator score (SCR-O).

15. A remote operator terminal (200) used by a remote operator (O) for a remote operation of a mobility device, the remote operator terminal comprising one or more processors configured to:
acquire terminal status information (STA-T) indicating a status of the remote operator terminal (200);
calculate a terminal score (SCR-T) indicating a suitability of the remote operator terminal (200) for the remote operation based on the terminal status information (STA-T); and
transmit information on the terminal score (SCR-T) or information on an integrated score (SCR) incorporating the terminal score (SCR-T) to a management system that selects a first remote operator (O-X) and a first remote operator terminal (200-X), to be assigned to the remote operation of a target mobility device (100-X).
